(19) **Europäisches Patentamt European Patent Office Office européen des brevets**

(11) **EP 3 525 340 B1**

(12) **EUROPEAN PATENT SPECIFICATION**

(45) Date of publication and mention of the grant of the patent:
**04.11.2020 Bulletin 2020/45**

(21) Application number: **17858129.4**

(22) Date of filing: **05.09.2017**

(51) Int Cl.:
*H02P 25/089* (2016.01)   *H02P 6/22* (2006.01)
*H02P 6/18* (2016.01)   *H02P 6/185* (2016.01)

(86) International application number:
**PCT/JP2017/031853**

(87) International publication number:
**WO 2018/066290 (12.04.2018 Gazette 2018/15)**

(54) **MOTOR CONTROL DEVICE**

MOTORSTEUERUNGSVORRICHTUNG

DISPOSITIF DE COMMANDE DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2016 JP 2016196490**

(43) Date of publication of application:
**14.08.2019 Bulletin 2019/33**

(73) Proprietor: **Sinfonia Technology Co., Ltd. Tokyo 105-8564 (JP)**

(72) Inventors:
• **IKEDA Hiroshi**
  **Tokyo 105-8564 (JP)**
• **TOMIZAKI Takeshi**
  **Tokyo 105-8564 (JP)**

• **KANAZAWA Kazunari**
  **Tokyo 105-8564 (JP)**
• **ITO Yuki**
  **Tokyo 105-8564 (JP)**

(74) Representative: **Grünecker Patent- und Rechtsanwälte PartG mbB Leopoldstraße 4 80802 München (DE)**

(56) References cited:
**EP-A2- 0 517 393**   **CN-A- 101 902 189**
**JP-A- H06 178 573**   **JP-A- 2001 128 490**
**JP-A- 2001 186 797**   **JP-A- 2016 103 912**
**US-A1- 2016 043 674**

**Description**

TECHNICAL FIELD

The present teaching relates to a motor control device that, when a motor including coils of a plurality of phases is started from a stopped state, estimates a rotational position of a rotor and determines a phase that is to be excited, based on the estimated rotational position.

BACKGROUND ART

Motor control devices which, when a motor including coils of a plurality of phases is started from a stopped state, estimate a rotational position of a rotor and determine a phase that is to be excited, based on the estimated rotational position, have been known. As such a motor control device, for example, a power conversion device including a determination unit that, at the time of start of rotation of a switched reluctance rotating machine, applies the same voltage to each of phases of the switched reluctance rotating machine and determines an initial position of a rotor of the switched reluctance rotating machine, based on a magnitude correlation between currents that flow in coils of the phases, is disclosed in Patent Document 1.

Also, the power conversion device disclosed in Patent Document 1 described above starts rotation of the rotor by exciting, based on an initial position of the rotor, which has been determined by the determination unit, a predetermined phase that corresponds to a rotational direction of the rotor.

The power conversion device disclosed in Patent Document 1 is able to detect the initial position of the rotor and determine a phase of a stator, which is a first target to be excited, even without a voltage sensor and a detailed inductance-current data map.

CITATION LIST

PATENT DOCUMENT

Patent Document 1: Japanese Patent Application Publication No. 2016-103912 EP0517393A2 relates to a method for starting a polyphase motor of the type having a plurality of stator coils and a rotor includes the steps of measuring the rise time of current on each of the stator coils, determining from the rise time measurement the position of the rotor, and determining a coil to apply a voltage to produce maximum startup torque of the motor.

CN101902189A relates to a method for initially positioning and starting a switched reluctance motor without a position sensor, and belongs to the technical field of control of the switched reluctance motor. The method comprises the following steps of: setting an inductance bottom threshold value LLow and an inductance top threshold value LHigh based on the basic characteristic that the inductance of the switched reluctance motor periodically changes with the position of a rotor; injecting short pulses into each phase winding and calculating inductance values according to a phase voltage equation; judging phases which can be currently switched on according to the relation among each phase inductance calculated value and LLow and LHigh and selecting estimated phases of an initial position angle at the same time; and establishing a phase inductance mathematical model to obtain angle information in the selected phases by using the relation between the inductance mathematical model and the inductance calculated values.

US2016043674A1 relates to a motor driving apparatus. The motor driving apparatus may include an inverter unit applying a starting voltage to a plurality of coils of a motor apparatus, a detection unit detecting currents generated by the starting voltage in the plurality of respective coils, and a controlling unit determining inductive rising times of the currents by the starting voltage in the plurality of respective coils using the detected currents and determining a position of a rotor using lengths of the inductive rising times.

SUMMARY OF INVENTION

TECHNICAL PROBLEM

Incidentally, in a structure disclosed in Patent Document 1 described above, the initial position of the rotor (a rotor) is determined based on the magnitude correlation between currents that flow in the coils of the phases of the switched reluctance rotating machine (a motor). Therefore, if a difference between the currents that flow in the coils of the phases is small, there is a probability that the magnitude correlation between the currents that flow in the coils of the phases is wrongly determined.

That is, the currents that flow in the coils of the phases of the motor vary in accordance with the rotational position of the rotor, and therefore, the difference between the currents that flow in the coils of the phases vary. If the difference between the currents that flow in the coils of the phases is small, there is a probability that largeness and smallness of the currents that flow in the coils of the phases are reversely determined due to a detection error of a sensor that detects a current, an error or the like when a value that has been detected by the sensor is converted.

Thus, a different relation from an original magnitude correlation between the currents that flow in the coils of the phases is obtained as a determination result, and therefore, there is a probability that a different phase from a phase that is to be excited in order to cause the motor to rotate in a predetermined rotational direction is excited. Thus, there is a probability that the motor rotates in an opposite direction to the predetermined rotational direction.

It is an object of the present teaching to achieve a structure in which, in a motor control device that performs start control of a motor, it is possible to cause, when the motor is started, a rotor of the motor to rotate in a desired rotational direction more reliably.

SOLUTION TO PROBLEM

The present invention is defined in the independent claim 1.

ADVANTAGEOUS EFFECTS OF INVENTION

With a motor control device according to an embodiment of the present teaching, if a difference between a first phase of a plurality of phases of a motor, an inductance of which is smallest, and a second phase of the plurality of phases, an inductance of which is second smallest, is a predetermined value or less, a phase of the first phase and the second phase, the inductance of which increases when a rotational position of a rotor changes in a rotational direction of the motor, is determined as an excitation phase. Thus, even when a difference between the inductance of the first phase and the inductance of the second phase is small and there is a probability that the order of the first phase and the second phase is changed due to a measurement error or the like, it is possible to cause the rotor of the motor to rotate in a desired rotational direction. Therefore, when the motor is started, the rotor of the motor can be caused to more reliably rotate in a desired rotational direction without causing the rotor to rotate in an opposite direction.

BRIEF DESCRIPTION OF DRAWINGS

[FIG. 1] FIG. 1 is a control block diagram illustrating a schematic structure of a motor control device according to an embodiment.
[FIG. 2] FIG. 2 is a graph schematically illustrating an example of a relation between an applied voltage that is applied to a coil of each phase of a motor and a current that flows in the coil of the each phase of the motor.
[FIG. 3] FIG. 3 is a chart schematically illustrating a relation between a rotational position of a rotor and an inductance of each phase.
[FIG. 4] FIG. 4 is a table illustrating a relation between a rotational position of a rotor and an excitation phase.
[FIG. 5] FIG. 5 is a graph describing a predetermined range that is used when an inductance difference is determined.
[FIG. 6] FIG. 6 is a flowchart illustrating a flow of an operation of excitation phase determination when a motor is started by a motor startup control unit.
[FIG. 7] FIG. 7 is a chart schematically illustrating another example of the relationship between the applied voltage that is applied to the coil of each phase of the motor and a current that flows in the coil of the each phase of the motor.

DESCRIPTION OF EMBODIMENTS

A motor control device according to an embodiment of the present teaching is a motor control device that, when a motor that includes a rotor and a stator including coils of a plurality of phases is started from a stopped state, estimates a rotational position of the rotor and determines, of the plurality of phases, a phase that is to be excited, based on the estimated rotational position. The motor control device includes an inductance detection unit that, when the rotational position is estimated, applies a predetermined voltage to the coils of the plurality of phases to calculate inductances of the plurality of phases, a phase selection unit that selects, of the plurality of phases, a phase the inductance of which is smallest as a first phase and a phase the inductance of which is second smallest as a second phase, and an excitation phase determination unit that determines, if a difference between the inductance of the first phase and the inductance of the second phase is a predetermined value or less, a phase of the first phase and the second phase, the inductance of which increases when the rotational position changes in a rotational direction of the motor, as the phase that is to be excited (First Structure).

With the above-described structure, using the inductance of each of the phases of the motor, a phase that is to be excited when the motor is started can be determined. That is, it is considered that, in the above-described structure, of the differences between the inductances of the plurality of phases of the motor, the difference between the inductance of the first phase the inductance of which is smallest and the inductance of the second phase the inductance of which is second smallest is smallest. Therefore, there is a probability that, if the difference between the inductances is the predetermined value or less, a magnitude correlation between the inductances of the first phase and the second phase is determined as an inversed relation of an actual relation due to a measurement error or the like. In contrast, in the above-described structure, a phase of the first phase and the second phase, the inductance of which increases when the rotational position of the rotor changes in the rotational direction of the motor, is determined as a phase that is to be excited.

Thus, when the difference between the inductance of the first phase and the inductance of the second phase is small, it is possible to prevent the magnitude correlation between the inductances from being a different relation from an actual relation due to a measurement error or the like. Therefore, when the motor is started, it is possible to prevent exciting a different phase from a phase that it is originally desired to excite.

Therefore, when the motor is started, it is possible to prevent the motor from rotating in an opposite direction to a rotational direction in which it is desired to cause the motor to rotate.

In the first structure, the excitation phase determination unit determines, if the difference is larger than the predetermined value, a phase of the plurality of phases, which is another phase than the first phase and the inductance of which increases when the rotational position changes in the rotational direction of the motor, as the phase that is to be excited (Second Structure).

If the difference between the inductance of the phase the inductance of which is smallest and the inductance of the phase the inductance of which is second smallest is larger than the predetermined value, there is a low probability that the phase selection unit wrongly recognizes the magnitude correlation between the inductance of the first phase and the inductance of the second phase due to a measurement error or the like. Therefore, the excitation phase determination unit determines the phase which is another phase than the first phase and the inductance of which increases when the rotational position of the rotor changes in the rotational direction of the motor as a phase that is to be excited, and thereby, it is possible to cause the rotor to rotate in a desired rotational direction.

In the first or second structure, the inductance detection unit includes a voltage application unit that applies the predetermined voltage to each of the coils of the plurality of phases, a time measurement unit that measures a time from a start of application of the predetermined voltage to each of the coils of the plurality of phases by the voltage application unit to a time at which a corresponding one of currents that flow in the coils of the phases reaches a fixed value, and an inductance calculation unit that calculates inductances of the plurality of phases, based on the time that has been measured by the time measurement unit. The voltage application unit stops applying a voltage to the coil of a phase of the plurality of phases, the current of which has reached the fixed value (Third Structure).

Thus, the inductance of each of the phases of the motor can be calculated based on a current that flows in the coil of the each of the phases. Then, the voltage application unit stops, when the current that flows in the coil of each of the phases of the motor reaches the fixed value, applying a voltage to the coil of the each of the phases, and therefore, it is possible to prevent the current that flows in the coil of the each of the phases from being larger than the fixed value. It is possible to prevent, by setting the fixed value to a smaller value than a current value at which the rotor of the motor rotates, the current that causes the rotor to rotate from flowing in the coils of the motor.

Therefore, with the above-described structure, it is possible to calculate the inductances of the phases of the motor without causing the rotor of the motor to rotate.

An embodiment of the present teaching will be described in detail below with reference to the accompanying drawings. In the drawings, the same or corresponding parts are denoted by the same reference symbol and the description of the parts is not repeated.

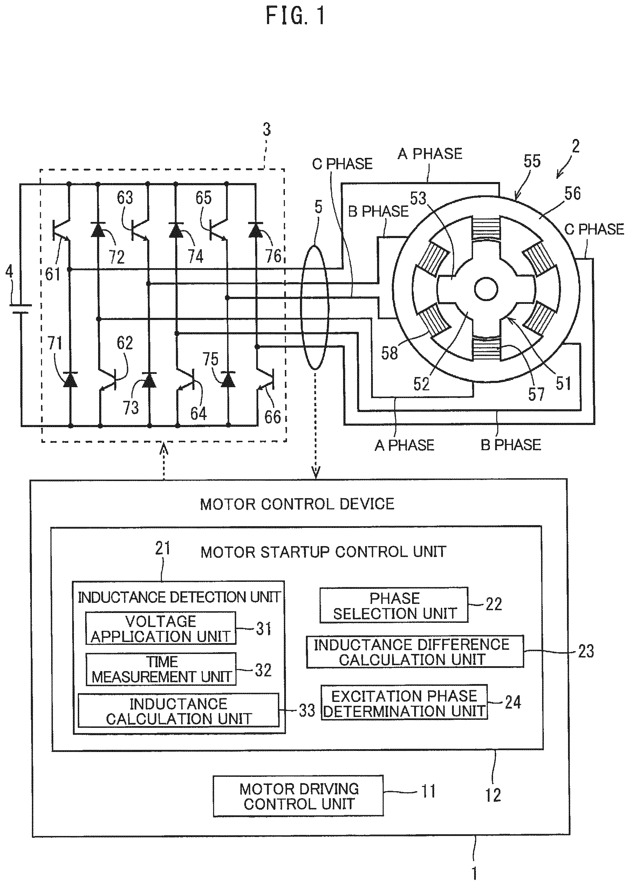

FIG. 1 is a block diagram illustrating a schematic structure of a motor control device 1 according to an embodiment of the present teaching. The motor control device 1 outputs a control signal to a drive circuit 3 that drives a motor 2. That is, the motor control device 1 controls driving of the motor 2. The motor 2 is, for example, a switched reluctance motor and includes a rotor 51 and a stator 55. Note that the motor 2 may be some other motor than a switched reluctance motor as long as the motor 2 is a motor that does not detect a rotational position of the rotor 51 by a sensor or the like. In FIG. 1, the reference numeral 5 denotes a current detection circuit that detects a current that flows in a coil 58 of each phase of the motor 2, which will be described later. Data of a value of a current that has been detected by a current detection circuit 5 is input to the motor control device 1.

The motor 2 is, for example, a motor of a so-called inner rotor type in which the rotor 51 is arranged inside the cylindrical stator 55. Note that the motor 2 may be a motor of a so-called outer rotor type in which a rotor rotates radially outside a stator.

The rotor 51 includes a substantially columnar rotor body 52 and a plurality of (four in this embodiment) salient poles 53 that protrude radially outward from the rotor body 52. The rotor 51 is configured such that the rotor body 52 and the plurality of salient poles 53 are integrally formed and is formed of an iron core.

The stator 55 includes a substantially cylindrical yoke 56, a plurality of (six in this embodiment) teeth 57 that extend inward from an inner circumference surface of the yoke 56, and coils 58 wound around the teeth 57. The yoke 56 and the plurality of teeth 57 are integrally formed. In the stator 55 of this embodiment, when the yoke 56 is viewed in a cylinder axial direction (in a state of FIG. 1), the coils 58 of the same phase are wound around two of the teeth 57 which oppose to one another in a radial direction of the yoke 56. That is, in this embodiment, as illustrated in FIG.1, the stator 55 has the coils 58 of three phases, that is, an A phase, a B phase, and a C phase.

The motor 2 of this embodiment is, for example, a motor the number of poles of which is four and the number of slots of which is six. Note that the motor 2 may be a motor the number of poles of which is some other number than four and the number of slots of which is some other number than six.

The drive circuit 3 is a switching circuit that includes a plurality of switching elements 61, 62, 63, 64, 65, and 66 that form a three-phase bridge circuit to drive the motor 2. Specifically, of the switching elements 61, 62, 63, 64, 65, and 66 of the drive circuit 3, the switching elements 61 and 62 are connected to the coils 58 of the A phase of the motor 2, the switching elements 63 and 64 are connected to the coils 58 of the B phase of the motor 2, and the switching elements 65 and 66 are connected to the coils 58 of the C phase of the motor 2.

For the switching elements 61, 62, 63, 64, 65, and 66, for example, IGBT is used. Diodes 71, 72, 73, 74, 75, and 76 are connected to the switching elements 61, 62, 63, 64, 65, and 66, respectively, in series. The diodes 71, 72, 73, 74, 75, and 76 are provided such that a current flows in one direction between each of the switching elements 61, 62, 63, 64, 65, and 66 and the coil 58 of a corresponding one of the phases of the motor 2.

The switching elements 61, 62, 63, 64, 65, and 66 are connected to a DC power source 4 in parallel. The switching elements 61, 62, 63, 64, 65, and 66 apply a voltage to the motor 2 from the DC power source 4 by performing a switching operation in accordance with a control signal (a switching signal) that is output from the motor control device 1, which will be described later.

The motor control device 1 outputs a control signal that drives the switching elements 61, 62, 63, 64, 65, and 66 to the drive circuit 3. Also, the motor control device 1 performs start control of the motor 2, based on a rotational position of the rotor 51 of the motor 2.

Specifically, the motor control device 1 includes a motor driving control unit 11 and a motor startup control unit 12. The motor driving control unit 11 generates a control signal for the drive circuit 3. A structure of the motor driving control unit 11 is similar to a known structure, and therefore, detailed description thereof will be omitted.

The motor startup control unit 12 determines a phase of the three phases of the motor 2, in which a current is caused to flow first, that is, a phase that is to be excited first, in accordance with the rotational position of the rotor 51 of the motor 2 in a stopped state. Specifically, the motor startup control unit 12 calculates an inductance of each phase in the motor 2 in a stopped state and determines a phase that is to be excited in accordance with a difference between inductances of two phases of the three phases, the inductances of which are small. Note that an order related to a rotational direction of the motor 2 when the motor 2 is started is input from outside to the motor startup control unit 12.

Specifically, the motor startup control unit 12 includes an inductance detection unit 21 that calculates an inductance of each phase of the motor 2, a phase selection unit 22 that selects two phases of the three phase of the motor 2, the inductances of which are small, an inductance difference calculation unit 23 that calculates a difference between the inductances of the selected two phases, and an excitation phase determination unit 24 that determines a phase that is to be excited, based on the difference.

The inductance detection unit 21 applies a pulse voltage to the coil 58 of each phase of the motor 2 in a stopped state, measures a time until a current that flows in the coil 58 of each phase reaches a fixed value, and calculates an inductance of each phase using the measured time. That is, the inductance detection unit 21 includes a voltage application unit 31 that applies a pulse voltage to the coil 58 of each phase of the motor 2, a time measurement unit 32 that measures a time until a current that flows in the coil 58 of each phase reaches a fixed value, and an inductance calculation unit 33 that calculates an inductance using the measured time. Note that data of a value of a current that flows in the coil 58 of each phase of the motor 2, which has been detected by the current detection circuit 5, is input to the inductance detection unit 21.

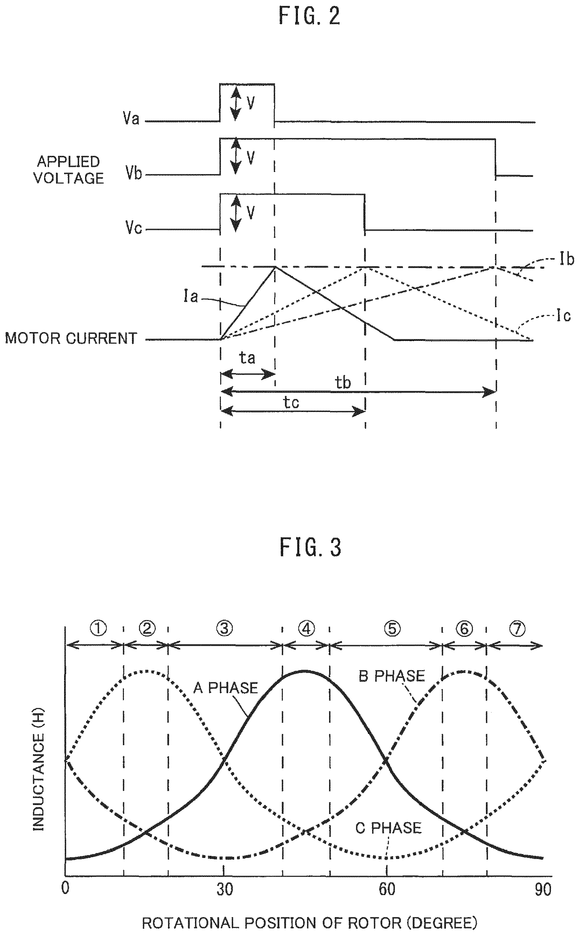

As illustrated in FIG. 2, the voltage application unit 31 applies a predetermined pulse voltage (an applied voltage) V to the motor 2 in a stopped state. The voltage application unit 31 simultaneously starts applying the predetermined pulse voltage V to the coils 58 of the three phases of the motor 2 and continues to apply the pulse voltage V until each of currents (motor currents) Ia, Ib, and Ic that flow in the coils 58 of the phases reaches the fixed value. For example, as illustrated in FIG. 2, for the currents (motor currents) Ia, Ib, and Ic that flow in the coils 58 of the phases of the motor 2, times ta, tb, and tc each of which is a time from a start of application of the voltage V to a time at which a corresponding one of the currents Ia, Ib, and Ic reaches the fixed value (an alternate long and two short dashes line in FIG. 2) are different from one another. Note that a relation between the applied voltage and each of the motor currents, which is illustrated in FIG. 2, is merely an example and varies depending on the structure of the motor or the like.

When a current that flows in the coil 58 of each phase of the motor 2 reaches the fixed value, the voltage application unit 31 stops applying the pulse voltage to the coil 58 of the phase. Thus, it is possible to prevent the rotor 51 of the motor 2 from rotating due to an unnecessary current continuously flowing in the coil 58 of each phase of the motor 2.

The time measurement unit 32 measures a time during which the predetermined pulse voltage is applied to the coil 58 of each phase of the motor 2 by the voltage application unit 31. That is, the time measurement unit 32 measures, in the coil 58 of each phase of the motor 2, a time (ta, tb, and tc in the example of FIG. 2) from a time point of a start of application of the pulse voltage to the coil 58 to a time at which the current that flows in the coil 58 reaches the fixed value.

Note that the fixed value is set to a smaller value than a current value at which the rotor 51 of the motor 2 rotates. Thus, it is possible to prevent a current that causes the rotor 51 to rotate from flowing in the coil 58 of the motor 2.

The inductance calculation unit 33 calculates an inductance of each phase of the motor 2 using the time that has been measured by the time measurement unit 32.

In this case, the inductance of each phase of the motor 2 is calculated using a current that flows in the coil 58 of each phase of the motor 2. That is, an inductance L, a voltage V, a current I, and a time t satisfy a relation of Expression 1 below. Accordingly, a time tx until the predetermined voltage V is applied to the coil 58 of each phase of the motor 2 and a current that flows in the coil 58 becomes a fixed value I is measured for each phase of the motor 2, and thereby, an inductance Lx of each phase can be calculated in accordance with Expression 2. Note that, in Expression 2, x is a, b, or c and each of Lx and tx corresponds to a value in a corresponding one of the phases of the motor 2.

Expression 1

$$V = L \times dI/dt$$

Expression 2

$$Lx = tx \times V/I$$

The inductance calculation unit 33 calculates the inductance Lx of each phase of the motor 2 using Expression 2 above.

The phase selection unit 22 selects two phases the inductances of which are small using the inductance of each phase of the motor 2, which has been calculated by the inductance calculation unit 33 of the inductance detection unit 21. Specifically, the phase selection unit 22 selects, of the phases of the motor 2, the phase the inductance of which is smallest as the first phase and also the phase the inductance of which is second smallest as the second phase.

The inductance difference calculation unit 23 calculates a difference (which will be referred hereinafter to as an inductance difference) between the inductance of the first phase and the inductance of the second phase each of which has been selected by the phase selection unit 22.

The excitation phase determination unit 24 determines a phase of the phases of the motor 2, which is to be excited at the time of a start of the motor 2, using the inductance difference that has been calculated by the inductance difference calculation unit 23. Specifically, in this embodiment, if the inductance difference is larger than a predetermined value, the excitation phase determination unit 24 determines, as an excitation phase, a phase of the phases of the motor 2, which is another phase than the first phase and the inductance of which increases when the rotational position of the rotor 51 moves in the rotational direction of the motor 2. On the other hand, if the inductance difference is the predetermined value or less, the excitation phase determination unit 24 determines, as an excitation phase, a phase of the first phase and the second phase, the inductance of which increases when the rotational position of the rotor 51 changes in the rotational direction of the motor 2. Note that the rotational direction of the motor 2 is a direction in which the motor 2 rotates at the time of a start of the motor 2. Information related to the rotational direction is included in the order that is input to the motor startup control unit 12.

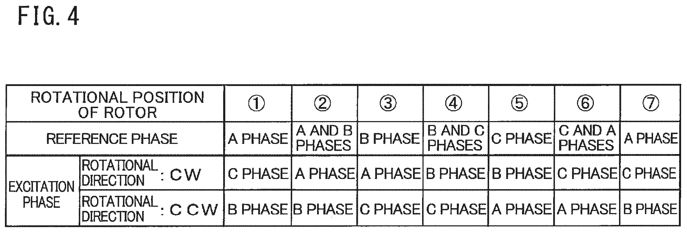

For example, if the inductances of the three phases of motor 2 change in accordance with the rotational position of the rotor 51, as illustrated in FIG. 3, the excitation phase determination unit 24 divides the rotational position of the rotor 51 into seven areas and determines an excitation phase for each area. An example of determination of an excitation phase by the excitation phase determination unit 24 is illustrated in FIG. 4.

If the inductance difference is larger than the predetermined value, the excitation phase determination unit 24 sets the first phase as a reference phase that is a reference used for determining an excitation phase. On the other hand, if the inductance difference is the predetermined value or less, the excitation phase determination unit 24 sets the first phase and the second phase as the reference phases. That is, the excitation phase determination unit 24 estimates the rotational position of the rotor 51 in the motor 2 in a stopped state. The excitation phase determination unit 24 determines an excitation phase, based on the estimated rotational position, in the following manner.

As illustrated in FIG. 4, in each area, if there is one reference phase (for example, the A phase in an area (1) in FIG. 4), the excitation phase determination unit 24 determines, as an excitation phase, a phase the inductance of which increases when the rotational position of the rotor 51 changes in the rotational direction of the motor 2 (for example, the C phase, when the rotational direction of the rotor 51 is clockwise (CW), and the B phase, when the rotational direction of the rotor 51 is counter clockwise (CCW) in the area (1) in FIG. 4). Note that CW is a rotational direction in which a value of the rotational position (an angle) of the rotor increases in FIG. 4 and CCW is a direction in which the value of the rotational position (the angle) of the rotor decreases in FIG. 4.

On the other hand, as illustrated in FIG. 4, in each area, if there are two reference phases (for example, the A and B phases in an area (2) in FIG. 4), the excitation phase determination unit 24 determines, as an excitation phase, a phase of the two phases, the inductance of which increases when the rotational position of the rotor 51 changes in the rotational direction of the motor 2 (for example, the A phase, when the rotational direction of the rotor 51 is CW, and the B phase, when the rotational direction of the rotor 51 is CCW in the area (2) of FIG. 4).

Thus, when the motor 2 in a stopped state is started, it is possible to prevent the motor 2 from rotating in an opposite direction to a desired rotational direction that has been input to the motor startup control unit 12. That is, in some cases, if the inductance difference between the inductances of the two phases of the phases of the motor 2, the inductances of which are small, is the predetermined value or less, the phase the inductance of which is smallest is wrongly recognized due to a measurement error, a conversion error, or the like (which will be hereinafter referred to merely as a measurement error or the like) of a current. However, as described above, if the inductance difference between the inductances of the two phases of the phases of the motor 2, the inductances of which are small, is the predetermined value or less, an excitation phase of the motor 2 can be correctly determined without being influenced by the measurement error or the like by setting one of the two phases as the phase the inductance of which is smallest. Therefore, when the motor 2 is started, it is possible to prevent the motor 2 from rotating in an unintended direction.

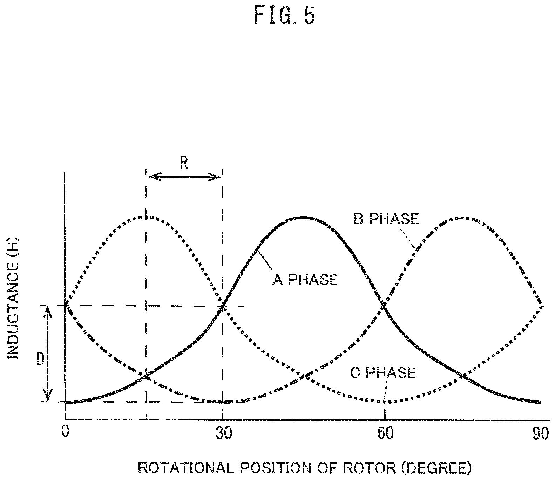

As illustrated in FIG. 5, the predetermined value is set to a maximum value D of the difference between the inductance of the first phase and the inductance of the second phase in a range R of the rotational position in which, when the rotational position of the rotor 51 changes in the rotational direction of the motor 2 in the first phase (the A phase in the example of FIG. 5), the inductance increases. Note that, in FIG. 5, a case in which the first phase is the A phase is illustrated but similar applies to a case in which the first phase is the B phase or the C phase.

Also, in accordance with measurement accuracy of the current detection circuit 5, the predetermined value may be set to be in a range of a predetermined multiple (for example, twice) of the measurement accuracy.

Thus, if the difference between the inductance of the first phase and the inductance of the second phase is the predetermined value or less, the first phase the inductance of which increases when the rotational position of the rotor 51 changes in the rotational direction of the motor 2 can be determined as an excitation phase. Therefore, when a motor is started, it is possible to prevent the motor from rotating in an unintended direction (an opposite direction).

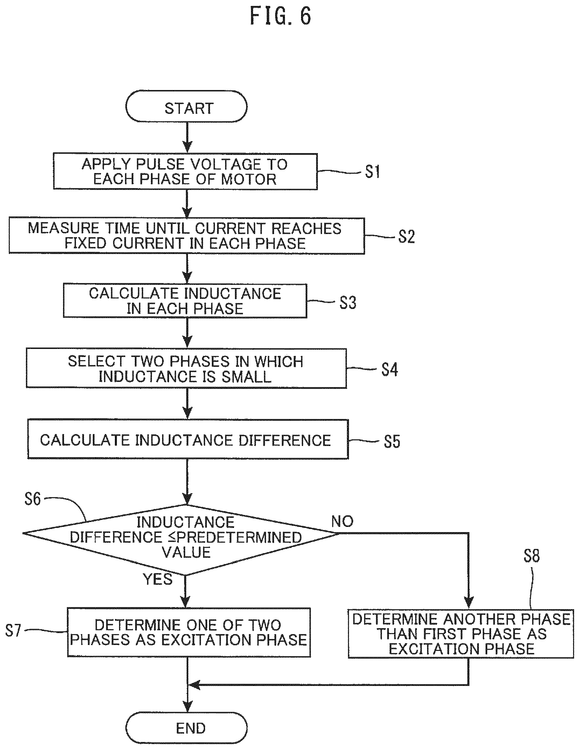

Next, an operation of the motor startup control unit 12 having the above-described structure will be described using a flow illustrated in FIG. 6.

When the flow illustrated in FIG. 6 starts (START), first, in Step S1, the voltage application unit 31 applies a fixed pulse voltage to the coil 58 of each phase of the motor 2. The voltage application unit 31 continues to apply the pulse voltage to the coil 58 of each phase of the motor 2 until a current that flows in the coil 58 reaches a fixed value.

Note that, at a time when the current that flows in the coil 58 of each phase reaches the fixed value, the voltage application unit 31 stops applying the pulse voltage to the coil 58 of the phase. Thus, it is possible to retrain a flow of an excessive current in the coils 58 of the motor 2. Therefore, it is possible to prevent, by the pulse voltage, the rotor 51 of the motor 2 from rotating.

In subsequent Step S2, the time measurement unit 32 measures a time until the current that flows in the coil 58 of each phase reaches the fixed value. The inductance of each phase of the motor 2 is proportional to the time.

In Step S3, the inductance calculation unit 33 calculates the inductance of each phase of the motor 2 using the time that has been measured in Step S2.

In subsequent Step S4, the phase selection unit 22 compares the respective inductances of the phases, which have been calculated in Step S3, and selects two of the phases of the motor 2, the inductances of which are small. The phase selection unit 22 selects, as the first phase, the phase the inductance of which is smallest and, on the other hand, selects, as the second phase, the phase the inductance of which is second smallest.

In Step S5 to which the process proceeds thereafter, the inductance difference calculation unit 23 calculates the difference (the inductance difference) between the inductance of the first phase and the inductance of the second phase that have been selected by the phase selection unit 22.

In subsequent Step S6, the excitation phase determination unit 24 determines whether or not the inductance difference is the predetermined value or more. If the inductance difference is the predetermined value or less (YES in Step S6), the process proceeds to Step S7 and the excitation phase determination unit 24 sets, as an excitation phase, one of the first phase and the second phase. Specifically, if the inductance difference is the predetermined value or less, the excitation phase determination unit 24 sets a phase of the first phase and the second phase, the inductance of which increases when the rotational position of the rotor 51 moves in the rotational direction of the motor 2, as an excitation phase.

On the other hand, if the inductance difference is larger than the predetermined value (NO in Step S6), the process proceeds to Step S8 and the excitation phase determination unit 24 sets a phase of the phases of the motor 2, which is another phase than the first phase, as an excitation phase. Specifically, if the inductance difference is larger than the predetermined value, the excitation phase determination unit 24 sets a phase of the phases of the motor 2, which is another phase than the first phase and the inductance of which increases when the rotational position of the rotor 51 moves in the rotational direction of the motor 2, as an excitation phase.

After the excitation phase determination unit 24 determines an excitation phase in Step S7 and S8, the flow is terminated (END).

In the above-described structure, when the motor 2 is started, if the inductance difference between the inductances of two phases of the phases of the motor 2, the inductances of which are smallest, is the predetermined value or less, one of the two phases is determined as an excitation phase without determining the phase the inductance of which is smallest. Thus, when the phase the inductance of which is smallest is determined, it is possible to prevent wrong recognition of a different phase from an actual phase as the phase the inductance of which is smallest due to a measurement error or the like.

Therefore, it is possible to prevent wrong determination of a phase that is to be excited when the motor 2 is started due to a measurement error or the like and to prevent reverse rotation of the motor 2.

Also, when the inductance of each phase of the motor 2 is calculated, at the time when the current that flows in the coil 58 reaches the fixed value, the voltage application unit 31 stops applying the pulse voltage to the coil 58. Thus, it is possible to prevent a current from unnecessarily flowing in the coil 58. Therefore, it is possible to prevent the motor 2 from rotating unintentionally.

(Other Embodiments)

An embodiment of the present teaching has been described above, but the above-described embodiment is merely an illustrative example of a preferred embodiment of the present teaching.

In the above-described embodiment, the motor 2 includes coils of three phases. However, the motor 2 may include coils of four phases or more.

In the above-described embodiment, the motor 2 is configured such that a waveform of an inductance of each phase with respect to the rotational position of the rotor 51 has a sine wave shape (see FIG. 3). However, the motor 2 may be configured such that the waveform of the inductance of each phase has some other shape than a sine wave shape, that is, for example, a shape with which the inductance is fixed in a range of the predetermined rotational position of the rotor 51.

In the above-described embodiment, the voltage application unit 31 simultaneously starts applying the pulse voltage to the coils 58 of the phases of the motor 2. However, the voltage application unit may be configured such that a timing at which the pulse voltage is applied to the coil 58 of each of the phases of the motor 2 is shifted from timings of application to the coils 58 of the other phases.

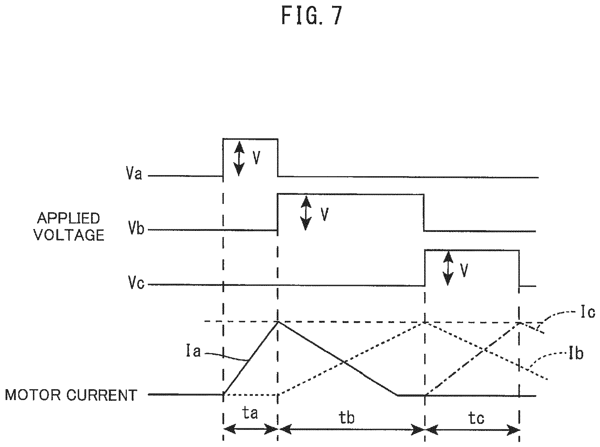

Specifically, for example, as illustrated in FIG. 7, the voltage application unit first starts applying the pulse voltage to the coil 58 of the A phase of the motor 2 and continues to apply the pulse voltage until a current that flows in the coil 58 of the A phase becomes a fixed value. Thereafter, the voltage application unit stops applying the pulse voltage to the coil 58 of the A phase. Next, the voltage application unit starts applying the pulse voltage to the coil 58 of the B phase and continues to apply the pulse voltage until a current that flows in the coil 58 of the B phase becomes the fixed value. Thereafter, the voltage application unit stops applying the pulse voltage to the coil 58 of the B phase. Then, the voltage application unit starts applying the pulse voltage to the coil 58 of the C phase and continues to apply the pulse voltage until a current that flows in the coil 58 of the C phase becomes the fixed value. Thereafter, the voltage application unit stops applying the pulse voltage to the coil 58 of the C phase.

Thus, when the voltage is applied to the coil 58 of each phase of the motor 2, influence of a magnetic leakage flux between the coils 58 of the phases can be prevented. That is, as in the above-described embodiment, in a case in which the pulse voltage is simultaneously applied to the coils 58 of the phases of the motor 2, there is a probability that a magnetic flux that is generated in the coil 58 of each phase influences, as a leakage magnetic flux, the other phases. Accordingly, there is a probability that the inductance of each phase of the motor 2 cannot be measured with high accuracy. In contrast, it is possible to prevent, by shifting the timing at which the pulse voltage is applied to the coil 58 of each phase of the motor 2 is shifted from the timings of application to the coils 58 of the other phases, as described above, influence of the magnetic flux that is generated in the coil 58 of each phase to the other phases. Therefore, the inductance of each phase of the motor 2 can be measured with high accuracy.

Note that, in an example of FIG. 7, the pulse voltage is applied to the coils 58 of an order of the A phase, the B phase, and the C phase. However, the order in which the pulse voltage is applied to the coils 58 of the A phase, the B phase, and the C phase may be any order.

INDUSTRIAL APPLICABILITY

The present teaching is applicable to a motor control device that performs start control in a motor that does not include a sensor that detects a rotational position of a rotor.

Claims

1. A motor control device (1) which, when a motor (2) that includes a rotor (51) and a stator (55) including coils (58) of a plurality of phases is started from a stopped state, estimates a rotational position of the rotor and determines an excitation phase of the plurality of phases, which is to be excited, based on the estimated rotational position, the motor control device comprising:

an inductance detection unit (21) that, when the rotational position is estimated, applies a predetermined voltage to the coils of the plurality of phases to calculate inductances of the plurality of phases;
a phase selection unit (22) that selects, of the plurality of phases, a phase the inductance of which is smallest as a first phase and a phase the inductance of which is second smallest as a second phase; and
**characterized in that**
an excitation phase determination unit (24) that determines, if a difference between the inductance of the first phase and the inductance of the second phase is a predetermined value or less, one of the first phase and the second phase as the excitation phase, wherein the inductance of the excitation phase increases when the rotational position changes in a rotational direction of the motor.

2. The motor control device according to claim 1, wherein the excitation phase determination unit determines, if the difference is larger than the predetermined value, one of the plurality of phases, which is another phase than the first phase, as the excitation phase and wherein the inductance of the excitation phase increases when the rotational position changes in the rotational direction of the motor.

3. The motor control device according to claim 1 or 2, wherein the inductance detection unit includes

a voltage application unit (31) that applies the predetermined voltage to each of the coils of the plurality of phases,

a time measurement unit (32) that measures a time from a start of application of the predetermined voltage to each of the coils of the plurality of phases by the voltage application unit to a time at which a corresponding one of currents that flow in the coils of the phases reaches a fixed value, and

an inductance calculation unit (33) that calculates inductances of the plurality of phases, based on the time that has been measured by the time measurement unit, and

the voltage application unit stops applying a voltage to the coil of a phase of the plurality of phases, wherein the current that flows in the coil of the phase of the plurality of phases has reached the fixed value.

**Patentansprüche**

1. Motorsteuerungsvorrichtung (1), die, wenn ein Motor (2), der einen Rotor (51) und einen Stator (55) mit Spulen (58) aus einer Vielzahl von Phasen aufweist, aus einem angehaltenen Zustand gestartet wird, eine Drehposition des Rotors schätzt und eine Erregungsphase aus der Vielzahl von Phasen, die zu erregen ist, auf der Basis der geschätzten Drehposition bestimmt, wobei die Motorsteuerungsvorrichtung umfasst:

eine Induktivitätserfassungseinheit (21), die, wenn die Drehposition geschätzt wird, eine vorgegebene Spannung an die Spulen aus der Vielzahl von Phasen anlegt, um die Induktivitäten der Vielzahl von Phasen zu berechnen; eine Phasenauswahleinheit (22), die aus der Vielzahl von Phasen eine Phase, deren Induktivität am kleinsten ist, als eine erste Phase und eine Phase, deren Induktivität am zweitkleinsten ist, als eine zweite Phase auswählt; und

**dadurch gekennzeichnet, dass**

eine Erregungsphasen-Bestimmungseinheit (24), die, wenn eine Differenz zwischen der Induktivität der ersten Phase und der Induktivität der zweiten Phase einen vorgegebenen Wert oder weniger beträgt, die erste Phase oder die zweite Phase als die Erregungsphase bestimmt, wobei die Induktivität der Erregungsphase zunimmt, wenn sich die Drehposition in einer Drehrichtung des Motors ändert.

2. Motorsteuerungsvorrichtung nach Anspruch 1, wobei die Erregungsphasen-Bestimmungseinheit, wenn die Differenz größer ist als der vorgegebene Wert, eine aus der Vielzahl von Phasen, die eine andere Phase ist als die erste Phase, als die Erregungsphase bestimmt, und wobei die Induktivität der Erregungsphase zunimmt, wenn sich die Drehposition in der Drehrichtung des Motors ändert.

3. Motorsteuerungsvorrichtung nach Anspruch 1 oder 2, wobei die Induktivitätserfassungseinheit aufweist:

eine Spannungsanlegeeinheit (31), die die vorgegebene Spannung an jede der Spulen aus der Vielzahl von Phasen anlegt, eine Zeitmesseinheit (32), die eine Zeit von einem Beginn des Anlegens der vorgegebenen Spannung an jede der Spulen aus der Vielzahl von Phasen durch die Spannungsanlegeeinheit bis zu einem Zeitpunkt misst, an dem ein entsprechender der Ströme, die in den Spulen der Phasen fließen, einen festen Wert erreicht, und eine Induktivitätsberechnungseinheit (33), die Induktivitäten aus der Vielzahl von Phasen auf der Basis der Zeit berechnet, die von der Zeitmesseinheit gemessen wurde, und die Spannungsanlegeeinheit das Anlegen einer Spannung an die Spule einer Phase aus der Vielzahl von Phasen anhält, wobei der Strom, der in der Spule der Phase aus der Vielzahl von Phasen fließt, den festen Wert erreicht hat.

**Revendications**

1. Dispositif de commande de moteur (1) qui, lorsqu'un moteur (2) qui comprend un rotor (51) et un stator (55) comprenant des bobines (58) d'une pluralité de phases est démarré à partir d'un état arrêté, estime une position de rotation du rotor et détermine une phase d'excitation de la pluralité de phases, à exciter, sur la base de la position de rotation estimée, le dispositif de commande de moteur comprenant :

une unité de détection d'inductance (21) qui, lorsque la position de rotation est estimée, applique une tension prédéterminée aux bobines de la pluralité de phases pour calculer des inductances de la pluralité de phases ;

une unité de sélection de phase (22) qui sélectionne, parmi la pluralité de phases, une phase dont l'inductance est la plus petite en tant que première phase et une phase dont l'inductance est la seconde plus petite en tant que seconde phase ; et

**caractérisé en ce que**

une unité de détermination de phase d'excitation (24) qui détermine, si une différence entre l'inductance de la première phase et l'inductance de la seconde phase est une valeur prédéterminée ou moins, l'une de la première phase et de la seconde phase en tant phase d'excitation, dans lequel l'inductance de la phase d'excitation augmente lorsque la position de rotation change dans une direction de rotation du moteur.

2. Dispositif de commande de moteur selon la revendication 1,

dans lequel l'unité de détermination de phase d'excitation détermine, si la différence est plus grande que la valeur prédéterminée, l'une de la pluralité de phases, qui est une autre phase que la première phase, en tant que phase d'excitation et dans lequel l'inductance de la phase d'excitation augmente lorsque la position de rotation change dans la direction de rotation du moteur.

3. Dispositif de commande de moteur selon la revendication 1 ou 2,

dans lequel l'unité de détection d'inductance comprend

une unité d'application de tension (31) qui applique la tension prédéterminée à chacune des bobines de la pluralité de phases,

une unité de mesure de temps (32) qui mesure un temps depuis un début d'application de la tension prédéterminée à chacune des bobines de la pluralité de phases par l'unité d'application de tension jusqu'à un temps auquel un correspondant des courants circulant dans les bobines des phases atteint une valeur fixe, et

une unité de calcul d'inductance (33) qui calcule des inductances de la pluralité de phases, sur la base du temps qui a été mesuré par l'unité de mesure de temps, et l'unité d'application de tension arrête d'appliquer une tension à la bobine d'une phase de la pluralité de phases, dans lequel le courant qui circule dans la bobine de la phase de la pluralité de phases a atteint la valeur fixe.

# FIG. 1

FIG. 2

FIG. 3

ROTATIONAL POSITION OF ROTOR (DEGREE)

# FIG. 4

| ROTATIONAL POSITION OF ROTOR | | ① | ② | ③ | ④ | ⑤ | ⑥ | ⑦ |
|---|---|---|---|---|---|---|---|---|
| REFERENCE PHASE | | A PHASE | A AND B PHASES | B PHASE | B AND C PHASES | C PHASE | C AND A PHASES | A PHASE |
| EXCITATION PHASE | ROTATIONAL DIRECTION : C W | C PHASE | A PHASE | A PHASE | B PHASE | B PHASE | C PHASE | C PHASE |
| | ROTATIONAL DIRECTION : C C W | B PHASE | B PHASE | C PHASE | C PHASE | A PHASE | A PHASE | B PHASE |

EP 3 525 340 B1

FIG. 5

ROTATIONAL POSITION OF ROTOR (DEGREE)

# FIG. 6

```
                    START

            APPLY PULSE VOLTAGE TO          S1
            EACH PHASE OF MOTOR

        MEASURE TIME UNTIL CURRENT REACHES   S2
          FIXED CURRENT IN EACH PHASE

            CALCULATE INDUCTANCE             S3
               IN EACH PHASE

            SELECT TWO PHASES IN WHICH       S4
              INDUCTANCE IS SMALL

          CALCULATE INDUCTANCE DIFFERENCE    S5

 S6
              INDUCTANCE                NO
       DIFFERENCE ≤PREDETERMINED                          S8
              VALUE

              YES
                                          DETERMINE ANOTHER PHASE
 S7    DETERMINE ONE OF TWO                THAN FIRST PHASE AS
       PHASES AS EXCITATION PHASE          EXCITATION PHASE

                    END
```

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016103912 A
- EP 0517393 A2
- CN 101902189 A
- US 2016043674 A1